# EUROPEAN PATENT APPLICATION

(11) **EP 4 098 760 A1**
(43) Date of publication of application: **07.12.2022**
(21) Application number: 21747522.7
(22) Date of filing: 21.01.2021
(51) Int. Cl.: C22C 21/02, C22C 21/06, C22F 1/05, F16B 35/00, C22F 1/00

(54) **ALUMINUM ALLOY, ALUMINUM ALLOY WIRE, ALUMINUM ALLOY MEMBER, AND BOLT**

(30) Priority: 30.01.2020 JP 2020014172
(71) Applicant: Sumitomo Electric Industries, Ltd., Osaka-shi, Osaka 541-0041 (JP); Sumitomo Electric Toyama Co., Ltd., Imizu-shi Toyama 934-8522 (JP)
(72) Inventor: MATSUGI, Ryota, Osaka-shi, Osaka 541-0041 (JP); IWAYAMA, Isao, Osaka-shi, Osaka 541-0041 (JP); MATSUO, Tsukasa, Imizu-shi Toyama 934-8522 (JP); TAKAI, Hiroaki, Imizu-shi Toyama 934-8522 (JP)
(74) Representative: Boult Wade Tennant LLP
(86) International application number: PCT/JP2021/002026
(87) International publication number: WO 2021/153412

(57) **Abstract**

An aluminum alloy has a composition including: more than or equal to 1.0 mass% and less than or equal to 1.8 mass% of Si; more than or equal to 0.5 mass% and less than or equal to 1.2 mass% of Mg; more than or equal to 0.3 mass% and less than or equal to 0.8 mass% of Fe; more than or equal to 0.1 mass% and less than or equal to 0.4 mass% of Cu; more than or equal to 0.2 mass% and less than or equal to 0.5 mass% of Mn; more than or equal to 0 mass% and less than or equal to 0.3 mass% of Cr; and at least one of more than or equal to 0.005 mass% and less than or equal to 0.6 mass% of Ni and more than or equal to 0.005 mass% and less than or equal to 0.6 mass% of Sn, wherein a remainder consists of Al and an inevitable impurity.

## Description

### TECHNICAL FIELD

The present disclosure relates to an aluminum alloy, an aluminum alloy wire, an aluminum alloy member, and a bolt.

The present application claims a priority based on Japanese Patent Application No. 2020-014172 filed on January 30, 2020, the entire content of which is incorporated herein by reference.

### BACKGROUND ART

PTL 1 discloses an aluminum alloy having a tensile strength that is comparable to or stronger than that of an aluminum alloy of JIS alloy number A6056. Hereinafter, the aluminum alloy described in PTL 1 is referred to as "conventional aluminum alloy".

### CITATION LIST

### PATENT LITERATURE

PTL 1: Japanese Patent Laying-Open No. 2015-166480

### SUMMARY OF INVENTION

An aluminum alloy of the present disclosure has a composition comprising: more than or equal to 1.0 mass% and less than or equal to 1.8 mass% of Si; more than or equal to 0.5 mass% and less than or equal to 1.2 mass% of Mg; more than or equal to 0.3 mass% and less than or equal to 0.8 mass% of Fe; more than or equal to 0.1 mass% and less than or equal to 0.4 mass% of Cu; more than or equal to 0.2 mass% and less than or equal to 0.5 mass% of Mn; more than or equal to 0 mass% and less than or equal to 0.3 mass% of Cr; and at least one of more than or equal to 0.005 mass% and less than or equal to 0.6 mass% of Ni and more than or equal to 0.005 mass% and less than or equal to 0.6 mass% of Sn, wherein a remainder consists of Al and an inevitable impurity.

An aluminum alloy wire of the present disclosure is composed of the aluminum alloy of the present disclosure.

An aluminum alloy member of the present disclosure is composed of the aluminum alloy of the present disclosure and has a tensile strength of more than or equal to 450 MPa.

A bolt of the present disclosure is composed of the aluminum alloy of the present disclosure, has a tensile strength of more than or equal to 450 MPa, has a breaking elongation of more than or equal to 5%, and has a 0.2% proof stress of more than or equal to 390 MPa.

### BRIEF DESCRIPTION OF DRAWINGS

Fig. 1 is a perspective view showing an aluminum alloy wire according to an embodiment.
Fig. 2 is a perspective view showing a bolt according to an embodiment.

### DETAILED DESCRIPTION

### [Problem to be Solved by the Present Disclosure]

An aluminum alloy having a higher strength has been desired.

A 6000-series alloy such as JIS alloy number A6056 has a high strength due to heat treatment such as T6 treatment. The 6000-series alloy is an alloy having a high strength among types of aluminum alloys. However, an aluminum alloy for a structural member or the like is desired to have further improved strength.

Further, in a process of manufacturing a structural member or the like, various types of plastic workings, such as rolling, wire drawing, and forging, are normally performed onto the aluminum alloy in addition to the heat treatment described above. Therefore, an aluminum alloy that has a high strength after the heat treatment and that has excellent plastic workability in the manufacturing process is preferable.

Therefore, one of objects of the present disclosure is to provide an aluminum alloy suitable for a material of a high-strength aluminum alloy member. Another object of the present disclosure is to provide an aluminum alloy wire suitable for a material of a high-strength aluminum alloy member. Still another object of the present disclosure is to provide a high-strength aluminum alloy member and a high-strength bolt.

### [Advantageous Effect of the Present Disclosure]

Each of the aluminum alloy and the aluminum alloy wire of the present disclosure is suitable for a material of a high-strength aluminum alloy member. Each of the aluminum alloy member of the present disclosure and the bolt of the present disclosure has a high strength.

### [Description of Embodiments]

First, embodiments of the present disclosure are listed and described.
(1) An aluminum alloy according to one embodiment of the present disclosure has a composition including: more than or equal to 1.0 mass% and less than or equal to 1.8 mass% of Si; more than or equal to 0.5 mass% and less than or equal to 1.2 mass% of Mg; more than or equal to 0.3 mass% and less than or equal to 0.8 mass% of Fe; more than or equal to 0.1 mass% and less than or equal to 0.4 mass% of Cu; more than or equal to 0.2 mass% and less than or equal to 0.5 mass% of Mn; more than or equal to 0 mass% and less than or equal to 0.3 mass% of Cr; and at least one of more than or equal to 0.005 mass% and less than or equal to 0.6 mass% of Ni and more than or equal to 0.005 mass% and less than or equal to 0.6 mass% of Sn, wherein a remainder consists of Al and an inevitable impurity.

As will be described later, Ni and Sn are considered to contribute to an effect of improving strength by dispersion strengthening. The aluminum alloy of the present disclosure includes one or both of Ni and Sn as compared with the conventional aluminum alloy described above. Therefore, with the aluminum alloy of the present disclosure, an aluminum alloy member having a higher strength than that of an aluminum alloy member composed of the conventional aluminum alloy can be formed.

Further, the aluminum alloy of the present disclosure has excellent plastic workability in the process of manufacturing an aluminum alloy member. Such an aluminum alloy of the present disclosure is suitable for a material of a high-strength aluminum alloy member.

(2) One example of the aluminum alloy of the present disclosure includes a configuration in which a content of the Si is more than 1.2 mass%, and a content of the Mg is more than 0.8 mass%.

With the above-described configuration, a large amount of Mg₂Si, which functions as a dispersion strengthening agent, is likely to be precipitated by aging treatment. Therefore, with the above-described configuration, an aluminum alloy member having a higher strength can be formed.

(3) One example of the aluminum alloy of the present disclosure includes a configuration in which both the Ni and the Sn are included in the aluminum alloy.

With the above-described configuration, an aluminum alloy member having a higher strength can be formed by effects of both the Ni and the Sn.

(4) One example of the aluminum alloy of the present disclosure includes a configuration in which the aluminum alloy has a tensile strength of more than or equal to 450 MPa after solution treatment and aging treatment are sequentially performed, a holding temperature in the solution treatment is a temperature selected from a range of more than or equal to 545°C and less than or equal to 575°C, and a holding time in the solution treatment is a time selected from a range of more than or equal to 30 minutes and less than or equal to 60 minutes, and a holding temperature in the aging treatment is a temperature selected from a range of more than or equal to 160°C and less than or equal to 180°C and a holding time in the aging treatment is a time selected from a range of more than or equal to 5 hours and less than or equal to 35 hours.

With the above-described configuration, an aluminum alloy member having a higher strength than that of the aluminum alloy member composed of the conventional aluminum alloy can be formed.

(5) One example of the aluminum alloy according to (4) includes a configuration in which after the solution treatment and the aging treatment are sequentially performed, the aluminum alloy has a breaking elongation of more than or equal to 5%.

With the above-described configuration, an aluminum alloy member having a high strength and a high elongation can be formed. Further, since the elongation is high after the aging treatment, plastic working may be able to be performed. In this case, with the above-described configuration, manufacturability of the aluminum alloy member is also excellent.

(6) One example of the aluminum alloy according to (4) or (5) includes a configuration in which after the solution treatment and the aging treatment are sequentially performed, the aluminum alloy has a 0.2% proof stress of more than or equal to 390 MPa.

With the above configuration, an aluminum alloy member having a high strength and a high proof stress can be formed.

(7) An aluminum alloy wire according to one embodiment of the present disclosure is composed of the aluminum alloy according to any one of (1) to (6).

The aluminum alloy wire of the present disclosure is suitable for a material of an aluminum alloy member including a portion in the form of a wire, such as a bolt, for example. When the aluminum alloy wire of the present disclosure is used, an aluminum alloy member having a higher strength than that of the aluminum alloy member composed of the conventional aluminum alloy can be formed.

(8) One example of the aluminum alloy wire of the present disclosure includes a configuration in which the aluminum alloy wire has a wire diameter of more than or equal to 3 mm and less than or equal to 15 mm.

The above-described configuration is suitable for a material of an aluminum alloy member including a portion in the form of a wire having a wire diameter falling within the above-described range, such as a bolt, for example.

(9) An aluminum alloy member according to one embodiment of the present disclosure is composed of the aluminum alloy according to any one of (1) to (6), and has a tensile strength of more than or equal to 450 MPa.

The aluminum alloy member of the present disclosure has a higher strength than that of the aluminum alloy member composed of the conventional aluminum alloy. Such an aluminum alloy member of the present disclosure can be used as a high-strength structural member or the like.

(10) One example of the aluminum alloy member according to (9) includes a configuration in which at least one of the following conditions is satisfied: a condition in which the aluminum alloy member has a breaking elongation of more than or equal to 5%; and a condition in which the aluminum alloy member has a 0.2% proof stress of more than or equal to 390 MPa.

The above configuration can be used as a structural member or the like having a high strength and at least one of a high elongation and a high proof stress.

(11) A bolt according to one embodiment of the present disclosure is composed of the aluminum alloy according to any one of (1) to (6), and has a tensile strength of more than or equal to 450 MPa, has a breaking elongation of more than or equal to 5%, and has a 0.2% proof stress of more than or equal to 390 MPa.

The bolt of the present disclosure has higher strength, elongation, and proof stress than those of the bolt composed of the conventional aluminum alloy. Such a bolt of the present disclosure can form a firm fastening structure. Also, the bolt of the present disclosure can maintain a firm fastening state for a long period of time.

### [Details of Embodiments of the Present Disclosure]

Hereinafter, embodiments of the present disclosure will be specifically described with reference to figures as appropriate.

### [Aluminum Alloy]

### (Composition)

An aluminum alloy of an embodiment is an alloy mainly composed of Al (aluminum) and including added elements. Specifically, the aluminum alloy of the embodiment has a composition including Si (silicon), Mg (magnesium), Fe (iron), Cu (copper), Mn (manganese), and at least one of Ni (nickel) and Sn (tin), wherein a remainder consists of Al and an inevitable impurity. The aluminum alloy of the embodiment may further include Cr (chromium) in addition to the added elements described above.

Hereinafter, the content and effect of each of the added elements will be described.

### <Si>

The content of Si is more than or equal to 1.0 mass% and less than or equal to 1.8 mass%.

Si mainly serves to strengthen the aluminum alloy by precipitation hardening. Specifically, Si is dispersed and present together with Mg in a parent phase as fine Mg₂Si and accordingly functions as a dispersion strengthening agent. Mg₂Si is a precipitate obtained by compounding, with Mg by performing aging treatment, i.e., artificial aging, Si dissolved in Al in the solid state by solution treatment. The remainder of Si that does not constitute Mg₂Si is dissolved in Al in the solid state, is precipitated as simple Si, or is crystallized as simple Si in a dendrite form, thereby strengthening the aluminum alloy. The above-described remainder of Si may be also referred to as excessive Si. It should be noted that the parent phase is mainly composed of Al.

Since the content of Si is more than or equal to 1.0 mass%, the effect of improving the strength by the strengthening can be obtained excellently. As the content of Si is larger, the content of Mg₂Si is likely to be made larger by the aging treatment, although depending on the content of Mg. As a result, the strength is likely to be improved. In order to improve the strength, the content of Si may be more than 1.0 mass%, more than or equal to 1.1 mass%, or more than or equal to 1.15 mass%. When the content of Si is more than 1.2 mass%, the strength is likely to be further higher.

Since the content of Si is less than or equal to 1.8 mass%, the precipitates or crystallized substances including Si are less likely to become coarse. Further, an amount of excessive Si is not too large. Therefore, the strength is suppressed from being decreased due to coarse precipitates and crystallized substances as well as a too large amount of excessive Si. Moreover, plastic workability is also suppressed from being decreased. It should be noted that coarse precipitates and crystallized substances serve as starting points of cracking to facilitate a decrease in strength. On the other hand, when the amount of excessive Si is too large, simple Si is segregated at crystal grain boundaries in the parent phase. The Si thus segregated cause the grain boundaries to be brittle, thereby facilitating a decrease in strength. In order to suppress the decrease in strength, the content of Si may be less than or equal to 1.7 mass% or less than or equal to 1.6 mass%. When the content of Si is less than or equal to 1.5 mass%, the strength is less likely to be decreased.

When the content of Si is more than 1.0 mass% and less than or equal to 1.7 mass% or is more than 1.2 mass% and less than or equal to 1.5 mass%, the above-described decrease in strength is suppressed and the aluminum alloy is likely to have a high strength.

### <Mg>

The content of Mg is more than or equal to 0.5 mass% and less than or equal to 1.2 mass%.

Mg is dissolved in Al in the solid state to strengthen the aluminum alloy. Further, Mg serves to strengthen the aluminum alloy together with Si by precipitation hardening as described above.

Since the content of Mg is more than or equal to 0.5 mass%, the effect of improving the strength by solid-solution strengthening and precipitation hardening can be obtained excellently. As the content of Mg is larger, the strength is likely to be more improved. In order to improve the strength, the content of Mg may be more than or equal to 0.6 mass% or more than or equal to 0.7 mass%. When the content of Mg is more than 0.8 mass%, the strength is likely to be further higher.

Since the content of Mg is less than or equal to 1.2 mass%, excessive Si is surely generated. Therefore, the strengthening effect by the excessive Si can be obtained excellently. As a result, the strength is likely to be high. Also, the proof stress is likely to be high. Further, macro-segregation is less likely to occur during casting. Decrease in resistance against stress corrosion cracking, decrease in plastic workability, and decrease in heat resistance are less likely to occur. The content of Mg may be less than or equal to 1.15 mass% or less than or equal to 1.1 mass% because these effects are obtained excellently. When the content of Mg is less than or equal to 1.05 mass%, the above-described effect is more likely to be obtained.

When the content of Mg is more than or equal to 0.6 mass% and less than or equal to 1.15 mass% or is more than 0.8 mass% and less than or equal to 1.05 mass%, the strength and the proof stress are likely to be improved. Further, the resistance against stress corrosion cracking, the plastic workability, and the heat resistance are less likely to be decreased.

### <Si and Mg>

Particularly when the content of Si is more than 1.2 mass% and the content of Mg is more than 0.8 mass%, a large amount of Mg₂Si is likely to be precipitated by the aging treatment as described above. Therefore, the strength is likely to be further higher. In order to improve the strength, the content of Si may be more than or equal to 1.3 mass% and the content of Mg may be more than or equal to 0.9 mass%. Further, the content of Si may be more than or equal to 1.35 mass% and the content of Mg may be more than or equal to 0.95 mass%.

### <Fe>

The content of Fe is more than or equal to 0.3 mass% and less than or equal to 0.8 mass%.

Fe is mainly dissolved in Al in the solid state to strengthen the aluminum alloy. Further, Fe contributes to attaining fine crystals of the aluminum alloy. With the fine crystals, the following effects (a) to (d) are obtained. Further, Fe can be expected to provide an effect of facilitating work hardening of the aluminum alloy. The strength and the proof stress are likely to be improved by the work hardening.
(a) Fine Mg₂Si is likely to be uniformly dispersed in the parent phase. Therefore, the strength and the proof stress are likely to be improved.
(b) An amount of crystal grain boundaries is increased. When the amount of grain boundaries is large, the embrittlement due to Si being segregated at the grain boundaries is likely to be relatively small. Therefore, the strength is suppressed from being decreased due to the embrittlement at the grain boundaries.
(c) Heat resistance and corrosion resistance are likely to be high.
(d) Plastic working is readily performed.

Since the content of Fe is more than or equal to 0.3 mass%, the above-described effects such as the solid-solution strengthening and the attainment of fine crystals can be obtained excellently. As a result, Mg₂Si is likely to be precipitated in the parent phase and is likely to be dispersed and present in the parent phase. Therefore, the effect of improving the strength by precipitation hardening is likely to be obtained. As the content of Fe is larger, the strength is likely to be improved. In order to improve the strength, the content of Fe may be more than or equal to 0.35 mass% or more than or equal to 0.4 mass%. When the content of Fe is more than or equal to 0.45 mass%, the strength is likely to be further higher.

Since the content of Fe is 0.8 mass% or less, the contents of crystallized substances and precipitates each composed of a compound including Al and Fe are likely to be small. Therefore, the plastic workability is suppressed from being decreased due to the compound. In this respect, an aluminum alloy member is readily manufactured. In order to ensure excellent plastic workability, the content of Fe may be less than or equal to 0.7 mass% or less than or equal to 0.6 mass%. When the content of Fe is less than or equal to 0.55 mass%, excellent plastic workability can be obtained.

When the content of Fe is more than or equal to 0.35 mass% and less than or equal to 0.7 mass% or is more than or equal to 0.45 mass% and less than or equal to 0.55 mass%, the strength is likely to be further higher. Further, excellent plastic workability is obtained.

### <Cu>

The content of Cu is more than or equal to 0.1 mass% and less than or equal to 0.4 mass%.

Cu mainly contributes to suppressing the adverse effect of Si segregated at the crystal grain boundaries in the parent phase. Specifically, by the solution treatment and the aging treatment, Cu forms precipitates together with Si segregated at the grain boundaries. Each of these precipitates is a compound that matches with the atomic arrangement of Al included in the parent phase. Therefore, the precipitates are less likely to adversely affect the grain boundaries. Since the embrittlement of grain boundaries by the segregated Si is suppressed, the strength is suppressed from being decreased.

Since the content of Cu is more than or equal to 0.1 mass%, the embrittlement of grain boundaries is suppressed. As the content of Cu is larger, the strength is likely to be suppressed from being decreased due to embrittlement of grain boundaries. In order to suppress decrease in strength, the content of Cu may be more than or equal to 0.15 mass% or more than or equal to 0.2 mass%. When the content of Cu is more than or equal to 0.25 mass%, the strength is less likely to occur.

Since the content of Cu is less than or equal to 0.4 mass%, a low-melting point phase including Cu is suppressed from being formed. As a result, the corrosion resistance and the heat resistance are suppressed from being decreased. In order to ensure excellent corrosion resistance and heat resistance, the content of Cu may be less than or equal to 0.38 mass% or less than or equal to 0.36 mass%. When the content of Cu is less than or equal to 0.35 mass%, excellent heat resistance and excellent corrosion resistance can be likely to be obtained.

When the content of Cu is more than or equal to 0.15 mass% and less than or equal to 0.38 mass% or is more than or equal to 0.25 mass% and less than or equal to 0.35 mass%, the above-described decrease in strength is likely to be suppressed. Further, excellent heat resistance and corrosion resistance can be obtained.

### <Mn>

The content of Mn is more than or equal to 0.2 mass% and less than or equal to 0.5 mass%.

Part of Mn is dissolved in Al in the solid state to strengthen the aluminum alloy. The remainder of Mn contributes to attaining fine crystals of the aluminum alloy. Specifically, Mn forms a compound together with Al. This compound suppresses the crystals from becoming coarse. With the fine crystals, the above-described effects (a) to (d) can be obtained. Moreover, Mn contributes to crystallizing, in the form of a sphere, the compound including Al and Fe. When the crystallized substance is in the form of a sphere, the plastic workability is less likely to be adversely affected. In this respect, Mn contributes to improvement of the plastic workability.

Since the content of Mn is more than or equal to 0.2 mass%, the effects such as the solid-solution strengthening, the attainment of fine crystals, and the attainment of the crystallized substances each in the form of a sphere can be obtained excellently. As the content of Mn is larger, these effects can be more likely to be obtained. In order to improve the strength and the like, the content of Mn may be more than or equal to 0.22 mass% or more than or equal to 0.24 mass%. When the content of Mn is more than or equal to 0.25 mass%, the above-described effects can be obtained excellently.

When the content of Mn is less than or equal to 0.5 mass%, the crystallized substances and precipitates each composed of the above-described compound including Al and Mn are less likely to become coarse. Therefore, the strength and the plastic workability are suppressed from being decreased by the coarse crystallized substances and precipitates. Further, since the content of Mn is less than or equal to 0.5 mass%, the solidus temperature of a melt of the aluminum alloy does not become too high. In this respect, a casting temperature does not become too high. Therefore, an aluminum alloy member is readily manufactured. In order to suppress decrease in strength and improve manufacturability, the content of Mn may be less than or equal to 0.45 mass% or less than or equal to 0.4 mass%. When the content of Mn is less than or equal to 0.35 mass%, the strength is likely to be decreased. Further, the casting temperature does not become too high.

When the content of Mn is more than or equal to 0.22 mass% and less than or equal to 0.45 mass% or is more than or equal to 0.25 mass% and less than or equal to 0.35 mass%, the effects such as the solid-solution strengthening and the attainment of fine crystals can be obtained excellently. Further, the strength is less likely to be decreased. The casting temperature does not become too high.

### <Cr>

The content of Cr is more than or equal to 0 mass% and less than or equal to 0.3 mass%.

When the content of Cr is 0 mass%, i.e., when Cr is not contained, the total content of the added elements is small. Therefore, the plastic workability is suppressed from being decreased due to the total content of the added elements being large. Further, the casting temperature does not become too high. In these respects, an aluminum alloy member can be readily manufactured.

When the content of Cr is more than 0 mass%, i.e., when Cr is contained, Cr forms a compound including Al. As with Mn, the compound including Al and Cr contributes to attaining fine crystals of the aluminum alloy. Further, Cr has an effect of improving heat resistance and corrosion resistance. In order to improve the strength by the fine crystals and improve the heat resistance and the corrosion resistance, the content of Cr is, for example, more than or equal to 0.005 mass% or more than or equal to 0.01 mass%.

Since the content of Cr is less than or equal to 0.3 mass%, as with Mn, the crystallized substances and precipitates each composed of the above-described compound including Al and Cr are less likely to become coarse. Further, the casting temperature does not become too high. In order to suppress the decrease in strength and improve the manufacturability, the content of Cr may be less than or equal to 0.2 mass%, less than or equal to 0.1 mass%, or less than or equal to 0.05 mass%.

When the content of Cr is more than or equal to 0.005 mass% and less than or equal to 0.2 mass% or is more than or equal to 0.01 mass% and less than or equal to 0.05 mass%, the above-described effects such as the attainment of fine crystals can be obtained excellently. Further, the strength is less likely to be decreased. The casting temperature does not become too high.

### <Other Elements>

The aluminum alloy of the embodiment may further include Sr (strontium) in addition to the added elements described above. Sr has an effect of attaining fine crystals of a casted member. Particularly when Sr is included in presence of Si, the size of a crystallized substance of simple Si can be small. Therefore, plastic workability for rolling or the like is improved. The content of Sr is, for example, more than or equal to 0.005 mass% and less than or equal to 0.05 mass%. In order to attain fine crystals of the casted member, the content of Sr may be more than or equal to 0.005 mass% and less than or equal to 0.03 mass%.

### <Ni>

The content of Ni is more than or equal to 0.005 mass% and less than or equal to 0.6 mass%.

Ni contributes to precipitating the above-described Mg₂Si finely. Further, Ni contributes to attaining fine crystals of the aluminum alloy. When both Mg₂Si and the crystals are fine, the following structure is likely to be obtained: a structure in which Mg₂Si is dispersed in the parent phase and the number of Mg₂Si present per unit area in the aluminum alloy is large. With such a structure, the effect of improving the strength by precipitation hardening is obtained excellently. Therefore, the strength is likely to be more improved.

Since the content of Ni is more than or equal to 0.005 mass%, the above-described effect of improving the strength can be obtained. When the content of Ni is more than or equal to 0.008 mass% or more than or equal to 0.01 mass%, the strength is likely to be higher. When the content of Ni is more than or equal to 0.015 mass%, the strength is likely to be further higher.

Since the content of Ni is less than or equal to 0.6 mass%, the crystallized substances and precipitates each composed of the compound including Al and Ni are less likely to become coarse. Therefore, the strength and the plastic workability are suppressed from being decreased by coarse crystallized substances and precipitates. In order to suppress the decrease in strength, the content of Ni may be less than or equal to 0.5 mass% or less than or equal to 0.4 mass%. When the content of Ni is less than or equal to 0.3 mass%, the strength is less likely to be decreased.

When the content of Ni is more than or equal to 0.008 mass% and less than or equal to 0.5 mass% or is more than or equal to 0.015 mass% and less than or equal to 0.3 mass%, the effect of improving the strength can be obtained excellently.

In the case where the content of Si is more than 1.2 mass% and the content of Mg is more than 0.8 mass%, when the content of Ni is more than or equal to 0.01 mass% and less than or equal to 0.5 mass% or more than or equal to 0.03 mass% and less than or equal to 0.3 mass%, the effect of improving the strength can be obtained excellently.

### <Sn>

The content of Sn is more than or equal to 0.005 mass% and less than or equal to 0.6 mass%.

Sn contributes to retarding natural aging and promoting artificial aging. That is, Sn promotes generation of Mg₂Si during the aging treatment. This promoting function is considered to occur in the following manner. Sn traps vacancies that are defects in Al in the atomic level. Further, Sn traps Mg. With Sn included, many pairs of the vacancies and Mg are formed after the solution treatment as compared with the conventional aluminum alloy including no Sn. Diffusion of solute atoms occurs through the vacancies. Therefore, when there are many pairs of the vacancies and Mg, a large amount of Mg₂Si is formed when Mg reacts with Si in Al. Since Mg₂Si is excellently formed, the strength is improved.

Since the content of Sn is more than or equal to 0.005 mass%, the effect of improving the strength can be obtained. When the content of Sn is more than or equal to 0.008 mass% or more than or equal to 0.01 mass%, the strength is likely to be large. When the content of Sn is more than or equal to 0.015 mass%, the strength is likely to be further higher. Further, it is considered that Sn is more likely to improve the strength than Ni.

Since the content of Sn is less than or equal to 0.6 mass%, a low melting point phase including Sn is suppressed from being formed. Here, in an aluminum alloy including such a low melting point phase including Sn, partial melting occurs during solution treatment. The partial melting causes formation of a large void inside the aluminum alloy. The large void serves as a starting point of cracking to decrease the strength. Since the low melting point phase is less likely to be formed, the strength is suppressed from being decreased by the low melting point phase. Further, the corrosion resistance is suppressed from being decreased. The content of Sn may be less than or equal to 0.5 mass% or less than or equal to 0.4 mass% because these effects are obtained excellently. When the content of Sn is less than or equal to 0.3 mass%, the above-described effect is more likely to be obtained.

When the content of Sn is more than or equal to 0.008 mass% and less than or equal to 0.5 mass% or is more than or equal to 0.015 mass% and less than or equal to 0.3 mass%, the effect of improving the strength can be obtained excellently.

In the case where the content of Si is more than 1.2 mass% and the content of Mg is more than 0.8 mass%, when the content of Sn is more than or equal to 0.01 mass% and less than or equal to 0.5 mass% or is more than or equal to 0.03 mass% and less than or equal to 0.3 mass%, the effect of improving the strength can be obtained excellently.

### <Ni and Sn>

When the aluminum alloy of the embodiment includes both Ni and Sn, the strength is likely to be further higher due to the effects of both Ni and Sn. The contents of Ni and Sn may be selected from the above-described ranges. Particularly when each of the content of Ni and the content of Sn is more than or equal to 0.03 mass% and less than or equal to 0.5 mass% or more than or equal to 0.04 mass% and less than or equal to 0.3 mass%, the effect of improving the strength is obtained excellently.

### (Structure)

Representatively, the aluminum alloy of the embodiment has a structure in which the precipitates are dispersed in the parent phase. Each of the precipitates is representatively a compound such as Mg₂Si described above. In addition to the precipitates, the crystallized substances are also present in the parent phase as described above. The structure in which the precipitates are dispersed is representatively obtained by performing the solution treatment and the aging treatment onto the aluminum alloy.

It should be noted that in the process of manufacturing the aluminum alloy of the embodiment, the solution treatment and the aging treatment does not need to be performed continuously. The aging treatment may be performed after the solution treatment.

When the aluminum alloy of the embodiment constitutes a material of a below-described aluminum alloy member of the embodiment, below-described bolt of the embodiment, or the like, the aluminum alloy has not been representatively subjected to the solution treatment and the aging treatment. Therefore, the aluminum alloy of the embodiment has a casted structure or solidified structure obtained by solidifying a melt, a processed structure obtained by performing plastic working, a softened structure obtained by performing softening treatment onto a plastic-worked material, or the like. The structure such as the casted structure, the processed structure, the softened structure, or the structure having been through the aging treatment can be distinguished by, for example, observing a cross section of the aluminum alloy using a transmission electron microscope (TEM). The structure can be distinguished in accordance with presence or absence of Mg₂Si as well as size of Mg₂Si, for example. Specifically, each of the processed structure, the softened structure, and the structure having been through the aging treatment includes Mg₂Si. Further, the structure having been through the aging treatment includes Mg₂Si in several-nanometer order. Meanwhile, each of the processed structure and the softened structure does not include Mg₂Si in several-nanometer order.

### (Mechanical Properties)

When the aluminum alloy of the embodiment has been through the solution treatment and the aging treatment, the aluminum alloy of the embodiment has a higher strength than those of JIS alloy number A6056 and the conventional aluminum alloy. Quantitatively, one exemplary aluminum alloy of the embodiment has a tensile strength of more than or equal to 450 MPa after the solution treatment and the aging treatment are sequentially performed under below-described conditions.

Another exemplary aluminum alloy of the embodiment has not only the above-described tensile strength but also a breaking elongation of more than or equal to 5% after the solution treatment and the aging treatment are sequentially performed under the below-described conditions.

Still another exemplary aluminum alloy of the embodiment has not only the above-described tensile strength but also a 0.2% proof stress of more than or equal to 390 MPa after the solution treatment and the aging treatment are sequentially performed under the below-described conditions.

### (Conditions of Solution Treatment)

A holding temperature is a temperature selected from a range of more than or equal to 545°C and less than or equal to 575°C.

A holding time is a time selected from a range of more than or equal to 30 minutes and less than or equal to 60 minutes.

### (Conditions of Aging Treatment)

A holding temperature is a temperature selected from a range of more than or equal to 160°C and less than or equal to 180°C.

A holding time is a time selected from a range of more than or equal to 5 hours and less than or equal to 35 hours.

The conditions of the solution treatment and the conditions of the aging treatment are conditions simulating those in the solution treatment and the aging treatment performed in the process of manufacturing. The above-described conditions include a plurality of "combinations of temperatures and times" selected from the range of holding temperature and the range of holding time. For at least one combination, one exemplary aluminum alloy of the embodiment has a tensile strength of more than or equal to 450 MPa. For at least one combination, another exemplary aluminum alloy of the embodiment has not only the above-described tensile strength but also at least one of a breaking elongation of more than or equal to 5% and a 0.2% proof stress of more than or equal to 390 MPa.

The following describes the aluminum alloy having been through the solution treatment and the aging treatment under the above-described conditions.

### <Tensile Strength>

The aluminum alloy of the embodiment having a tensile strength of more than or equal to 450 MPa has a higher strength than that of the conventional aluminum alloy. In order to improve the strength, the tensile strength is preferably more than or equal to 452 MPa or more than or equal to 455 MPa. Depending on the composition, the tensile strength is more than or equal to 460 MPa, more than or equal to 465 MPa, or more than or equal to 470 MPa.

The upper limit of the tensile strength is not particularly provided. In order to suppress a decrease in elongation, the tensile strength is, for example, less than or equal to 550 MPa.

### <Breaking Elongation>

The aluminum alloy of the embodiment having a breaking elongation of more than or equal to 5% has a high strength and a high elongation. With the high elongation, plastic working may be able to be performed after the aging treatment. In this case, an aluminum alloy member is readily manufactured. In order to ensure excellent elongation, the breaking elongation may be more than or equal to 8% or more than or equal to 9%. Depending on the composition, the breaking elongation is more than or equal to 10%, more than or equal to 12%, more than or equal to 15%, or more than or equal to 16%.

The upper limit of the breaking elongation is not particularly provided. In order to suppress a decrease in strength, the breaking elongation is, for example, less than or equal to 40%.

### <0.2% Proof Stress>

The aluminum alloy of the embodiment having a 0.2% proof stress of more than or equal to 390 MPa has a high strength and a high proof stress. With the high proof stress, stress is less likely to be relaxed, for example. Such an aluminum alloy is suitable for a material of a structural member such as a bolt. In order to improve the strength, the 0.2% proof stress may be more than or equal to 395 MPa, more than or equal to 400 MPa, or more than or equal to 405 MPa. Depending on the composition, the 0.2% proof stress is more than or equal to 410 MPa.

The upper limit of the 0.2% proof stress is not particularly provided. In order to suppress a decrease in elongation, the 0.2% proof stress is, for example, less than or equal to 490 MPa.

### <Measurement Method>

Each of the tensile strength, the breaking elongation, and the 0.2% proof stress is measured by performing a tensile test in accordance with JIS Z 2241: 2011. In accordance with JIS Z 2241: 2011, a test piece for measurement is produced from the aluminum alloy having been through the solution treatment and the aging treatment.

### (Main Effect)

Since the aluminum alloy of the embodiment has the specific composition including at least one of Ni and Sn as described above, a high-strength aluminum alloy member can be formed. This effect will be specifically described in a below-described Test Example.

### [Aluminum Alloy Member]

The aluminum alloy of the embodiment is representatively used as a material for forming various types of aluminum alloy members. A representative, exemplary aluminum alloy member composed of the aluminum alloy of the embodiment is a plastic-worked member obtained by performing at least one type of plastic working. The plastic-worked member is more likely to have a high strength due to work hardening as compared with an aluminum alloy having been through no plastic working such as a casted member. The aluminum alloy of the embodiment has the composition excellent in plastic workability as described above. Therefore, a plastic-worked member can be readily manufactured.

Specific examples of the plastic-worked member include a primary worked member and a secondary worked member obtained by further performing working onto the primary worked member.

The primary worked member is obtained by performing plastic working onto a casted member including a continuous-casted member.

Specific examples of the primary worked member include a rolled member, a wire-drawn member, a forged member, an extruded member, and the like. The primary worked member is representatively used as a material when manufacturing the secondary worked member. Examples of the rolled member include a material in the form of a wire and a material in the form of a plate. The rolled member in the form of a wire includes a relatively thick material, that is, a material in the form of a bar. One exemplary wire-drawn member is a below-described aluminum alloy wire of the embodiment.

The secondary worked member is representatively a final product.

Examples of the working further performed onto the primary worked member in the process of manufacturing the secondary worked member include: plastic working; surface treatment such as anodic oxidation treatment and polishing; and cutting. The secondary worked member is used, for example, for various types of structural members such as automobile parts and bicycle parts. Examples of the automobile parts include a bolt, a spool valve, and the like. In a process of manufacturing the bolt, a wire-drawn member, which is the primary worked member, is subjected to forging such as head working or component rolling. In a process of manufacturing the spool valve, the wire-drawn member is subjected to a cutting process. Examples of the bicycle parts include a crank and the like. In a process of manufacturing the crank, a casted member is subjected to forging.

In the process of manufacturing the secondary worked member, the solution treatment and the aging treatment are performed at appropriate timings, with the result that the secondary worked member has a high tensile strength as described later. Further, the secondary worked member may have a high strength and at least one of a high elongation and a high proof stress.

### <Mechanical Properties>

The aluminum alloy member of the embodiment is composed of the aluminum alloy of the embodiment and has a tensile strength of more than or equal to 450 MPa. When the tensile strength is more than or equal to 450 MPa, the aluminum alloy member of the embodiment has a higher strength than that of the aluminum alloy member composed of the conventional aluminum alloy. Such an aluminum alloy member of the embodiment can be used as a high-strength structural member. The range of the tensile strength is the same as that in the above-described section <Tensile Strength>.

One exemplary aluminum alloy member of the embodiment has not only the above-described tensile strength but also satisfies at least one of the following conditions: a condition in which the aluminum alloy member has a breaking elongation of more than or equal to 5%; and a condition in which the aluminum alloy member has a 0.2% proof stress of more than or equal to 390 MPa. The aluminum alloy member of the embodiment having a breaking elongation of more than or equal to 5% can be used as a structural member having a high strength and a high toughness. The aluminum alloy member of the embodiment having a 0.2% proof stress of more than or equal to 390 MPa can be used as a structural member having a high strength and a high proof stress. When the proof stress is high, stress is less likely to be relaxed, for example. Therefore, the structural member having a high strength and a high proof stress can be suitably used as a fastening member such as a bolt. The range of the breaking elongation and the range of the 0.2% proof stress are the same as those in the above-described sections <Breaking Elongation> and <0.2% Proof Stress>.

When the aluminum alloy member of the embodiment has a tensile strength of more than or equal to 450 MPa, has a breaking elongation of more than or equal to 5%, and has a 0.2% proof stress of more than or equal to 390 MPa, the aluminum alloy member can be suitably used as a structural member having a high strength, a high toughness, and a high proof stress. It should be noted that the test piece for the tensile test may be produced from the aluminum alloy member in accordance with JIS Z 2241: 2011.

### <Aluminum Alloy Wire>

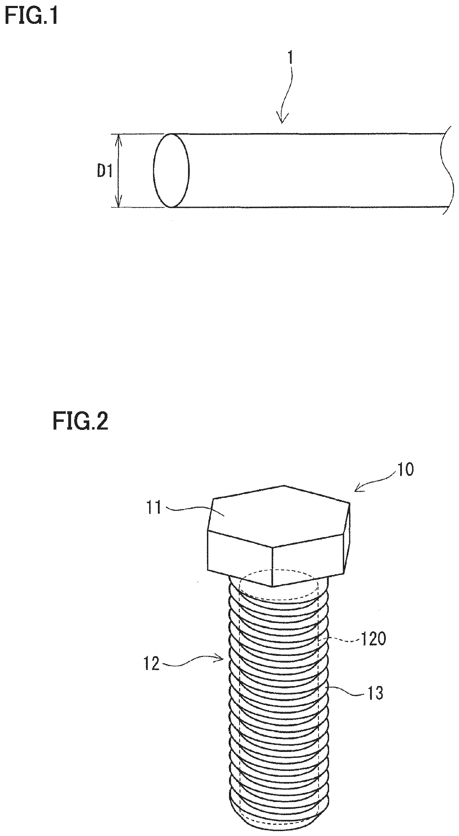

The following describes an aluminum alloy wire of the embodiment with reference to Fig. 1 as appropriate.

An aluminum alloy wire 1 of the embodiment is composed of the aluminum alloy of the embodiment. A representative example of aluminum alloy wire 1 is a wire-drawn member that is the primary worked member described above. In this case, aluminum alloy wire 1 can be used for a material of a secondary worked member, i.e., an aluminum alloy member including a portion in the form of a wire, such as a material of a bolt. Since aluminum alloy wire 1 is composed of the aluminum alloy of the embodiment, plastic working such as forging is readily performed in the process of manufacturing the secondary worked member as described above.

The shape and size of aluminum alloy wire 1 can be appropriately selected depending on an intended purpose of use or the like.

Regarding the shape of aluminum alloy wire 1, for example, aluminum alloy wire 1 may be: a round wire having a circular cross sectional shape; a polygonal wire having a polygonal cross sectional shape such as a quadrangular cross sectional shape; an odd-shaped wire having an elliptical cross sectional shape or the like; or the like. The cross section here is a cross section obtained by cutting aluminum alloy wire 1 along a plane orthogonal to the axial direction of aluminum alloy wire 1.

Regarding the size of aluminum alloy wire 1, aluminum alloy wire 1 has a wire diameter D1 of more than or equal to 3 mm and less than or equal to 15 mm, for example. When wire diameter D1 is in the above-described range, aluminum alloy wire 1 can be used, for example, as a material of a bolt, a material of a spool valve, or the like. Further, aluminum alloy wire 1 having a wire diameter D1 of less than or equal to 13 mm or less than or equal to 12 mm is suitable for a material of a bolt having a size suitable for fastening of an automobile part or the like.

Wire diameter D1 here is measured in the following manner. A cross section of aluminum alloy wire 1 is taken. In this cross section, a minimum circle encompassing the contour line of aluminum alloy wire 1 is taken. Wire diameter D1 is the diameter of this minimum circle. When aluminum alloy wire 1 is a round wire, the outer diameter of the round wire corresponds to wire diameter D1.

The length of aluminum alloy wire 1 is not particularly limited. When aluminum alloy wire 1 is the primary worked member described above, aluminum alloy wire 1 has a length with which aluminum alloy wire 1 can be sufficiently wound in the form of a coil, for example, a length of more than or equal to 3 m. When aluminum alloy wire 1 is used as the material of the secondary worked member, aluminum alloy wire 1 is representatively cut to a predetermined length. The cut piece is subjected to secondary working.

It should be noted that when the solution treatment and the aging treatment are performed in the process of manufacturing aluminum alloy wire 1, aluminum alloy wire 1 has a high strength as described above. Such an aluminum alloy wire 1 can be used as a high-strength wire member. Further, aluminum alloy wire 1 may have the high strength and at least one of the high elongation and the high proof stress. The range of the tensile strength, the range of the breaking elongation, and the range of the 0.2% proof stress of aluminum alloy wire 1 are the same as those in the above-described section <Mechanical Properties>. The test piece for the tensile test may be produced from aluminum alloy wire 1 in accordance with JIS Z 2241: 2011.

### <Bolt>

The following describes a bolt of the embodiment with reference to Fig. 2 as appropriate.

A bolt 10 of the embodiment is composed of the aluminum alloy of the embodiment and has a tensile strength of more than or equal to 450 MPa, has a breaking elongation of more than or equal to 5%, and has a 0.2% proof stress of more than or equal to 390 MPa. Such a bolt 10 of the embodiment has a higher strength than that of a bolt composed of the conventional aluminum alloy described above. Therefore, bolt 10 can form a firm fastening structure. Further, bolt 10 of the embodiment also has a high elongation and a high proof stress. Therefore, bolt 10 is less likely to be broken and is less likely to relax stress. Hence, bolt 10 can maintain a firm fastening state for a long period of time.

Bolt 10 representatively includes a head portion 11 and a shank portion 12. Shank portion 12 includes a threaded portion 13. Threaded portion 13 is provided in a region on the surface side of shank portion 12 in a range from the tip of shank portion 12 to a predetermined position of shank portion 12.

Bolt 10 is manufactured using aluminum alloy wire 1 of the embodiment that is the primary worked member described above. Aluminum alloy wire 1 is cut to a predetermined length. The cut piece is subjected to forging such as head working and component rolling. Further, the solution treatment and the aging treatment are performed at appropriate timings, thereby manufacturing bolt 10.

The shape and size of bolt 10 can be appropriately selected.

Regarding the shape of bolt 10, Fig. 2 illustrates a hexagonal head bolt having head portion 11 in the form of a hexagonal prism; however, the shape of bolt 10 can be changed appropriately.

Regarding the size of the shape of bolt 10, in the case of the hexagonal head bolt, the "nominal diameter d of screw" defined in JIS B 1180: 2014 is M2 to M12, for example.

The tensile strength, breaking elongation, and 0.2% proof stress of bolt 10 are measured by performing a tensile test using bolt 10 itself as a test piece in accordance with JIS B 1051: 2000.

The tensile strength, breaking elongation, and 0.2% proof stress of the aluminum alloy itself in bolt 10 are measured by performing a tensile test in accordance with JIS Z 2241: 2011. Here, forging is performed in the process of manufacturing bolt 10 as described above. The strength of bolt 10 may be improved due to work hardening by the forging. Therefore, when measuring the tensile strength or the like of the aluminum alloy itself, the test piece is produced from an inner region, in which threaded portion 13 is not provided, of shank portion 12 of bolt 10. That is, the test piece is produced from a region that is not substantially work-hardened by the forging, or is produced from a region that is less affected by the work hardening. Specifically, the test piece is produced from a core portion 120 of shank portion 12, core portion 120 being a portion obtained by cutting to remove a surface-side region including threaded portion 13.

It should be noted that the range of the tensile strength, the range of the breaking elongation, and the range of the 0.2% proof stress of bolt 10 are the same as those in the above-described sections <Tensile Strength>, <Breaking Elongation>, and <0.2% Proof Stress>.

### (Main Effect)

Each of the aluminum alloy member of the embodiment and bolt 10 of the embodiment has a tensile strength of more than or equal to 450 MPa, and has a high strength. Aluminum alloy wire 1 of the embodiment can be suitably used, for example, as the material of the high-strength aluminum alloy member and the material of bolt 10.

### [Method of Manufacturing Aluminum Alloy]

Manners of use for the aluminum alloy of the embodiment as distinguished based on a process of manufacturing are as follows: a casted member, a plastic-worked member, a heat-treated member, a cut member, a surface-treated member, and the like. As a basic method of manufacturing each of the members to be used in the above-described manners of use, the manufacturing method described in PTL 1 can be used. That is, in the manufacturing of the aluminum alloy of the embodiment, there is a little or substantially no significant change in the manufacturing steps as compared with the manufacturing method described in PTL 1. In this respect, the aluminum alloy of the embodiment is excellent in manufacturability. Hereinafter, the manufacturing method will be briefly described.

The casted member is manufactured through a first step of casting a melt composed of the aluminum alloy having the above-described specific composition.

The plastic-worked member is manufactured, for example, through a second step of performing one or more types of plastic workings onto at least a portion of the casted member.

The heat-treated member is manufactured, for example, through a third step of performing heat treatment onto the casted member or the plastic-worked member. Examples of the heat treatment include the solution treatment and the aging treatment. Each of the aluminum alloy member of the embodiment having a tensile strength of more than or equal to 450 MPa and bolt 10 of the embodiment is an example of the heat-treated member. Therefore, in the process of manufacturing each of the aluminum alloy member of the embodiment and bolt 10 of the embodiment, the heat treatment includes the solution treatment and the aging treatment. The aging treatment can be performing at any timing after the solution treatment. Other examples of the heat treatment include softening treatment.

Each of the cut member and the surface-treated member is manufactured through, for example, a fourth step of performing cutting or surface treatment onto the casted member, the plastic-worked member, or the heat-treated member.

Thus, the aluminum alloy of the embodiment is manufactured by the manufacturing method including the above-described first step. Alternatively, the aluminum alloy of the embodiment is manufactured by the manufacturing method including the first step and at least one of the second step, the third step, and the fourth step. The process of manufacturing may be selected in accordance with the above-described manners of use.

Hereinafter, each of the steps will be described.

### <First Step: Casting>

In the first step, various types of casting methods can be used. In particular, when manufacturing a continuous long aluminum alloy wire or the like, a continuous casting method can be suitably used.

With the continuous casting method, a melt can be solidified at a solidification rate faster than that in billet casting. That is, rapid solidification can be performed. Due to the rapid solidification, the above-described crystallized substances are less likely to become coarse. Further, the crystals of the casted member are likely to be fine.

When an amount of the coarse crystallized substances is small, the added elements are likely to be dissolved in Al in the solid state in the solution treatment. As a result, Mg₂Si is likely to be formed in the aging treatment performed after the solution treatment. In the aluminum alloy of the embodiment, Mg₂Si is more likely to be formed by the function of Sn as described above. Further, in the aluminum alloy of the embodiment, Mg₂Si is likely to be finely precipitated by the function of Ni as described above. When the casted member has a fine crystal structure, a fine crystal structure can be likely to be obtained also after the casting. In the aluminum alloy of the embodiment, a fine crystal structure is more likely to be obtained by the function of Fe, Mn, and, if any, Cr as described above. When the parent phase has a fine crystal structure, fine Mg₂Si is likely to be uniformly dispersed in the parent phase. As a result, the effect of improving the strength by precipitation hardening is obtained excellently.

In addition, in the continuous casting method, the crystals are likely to be fine, and the ratio of isometric crystals included per unit cross sectional area is likely to be high. Therefore, plastic working is readily performed after the casting. Further, the plastic-worked member obtained after the plastic working is likely to have an excellent surface property. Further, when the continuous-casted member is used as a material of a rolled member, a wire-drawn member, or the like, the rolled member, the wire-drawn member, or the like can be mass-produced.

As the continuous casting method, for example, a known method such as a belt- and-wheel method or a Properzi method can be used. The solidification rate in the continuous casting, i.e., the cooling rate of the melt is more than or equal to 1°C/sec. As the solidification rate is higher, the above-described effect such as the attainment of fine crystals is more likely to be obtained. The solidification rate may be more than or equal to 2°C/sec, more than or equal to 5°C/sec, more than or equal to 8°C/sec, or more than or equal to 10°C/sec. Preferably, when the solidification rate is more than or equal to 1°C/sec in the whole of the melt, the whole of the melt is cooled uniformly.

In this case, the components of the casted member are likely to be uniform.

Therefore, homogenization treatment can be omitted. It should be noted that a casting method other than the continuous casting method may be used as long as the solidification rate is more than or equal to 1°C/sec.

### <Second Step: Plastic Working>

Examples of the plastic working performed onto the casted member include rolling, wire drawing, forging, extrusion, and the like. Any of hot plastic working, warm plastic working, and cold plastic working is employed as the plastic working. One plastic working may include working for a plurality of passes.

### <Third Step: Heat Treatment>

A holding time in the heat treatment here does not include a temperature increasing time.

### <<Solution Treatment>>

In the solution treatment, a holding temperature is a temperature selected from a range of more than or equal to 545°C and less than or equal to 575°C. A holding time is a time selected from a range of more than or equal to 30 minutes and less than or equal to 60 minutes. A temperature increasing time until the holding temperature is reached is less than or equal to 60 minutes.

When the holding temperature is more than or equal to 545°C, the added elements are likely to be dissolved in Al in the solid state. In order to promote the dissolving in the solid state, the holding temperature may be more than or equal to 550°C, more than or equal to 555°C, or more than or equal to 560°C.

When the holding temperature is less than or equal to 575°C, the amount of Si segregated at crystal grain boundaries is likely to be small. In order to reduce the segregated Si, the holding temperature may be less than or equal to 570°C.

When the holding time is more than or equal to 30 minutes, the added elements are likely to be dissolved in Al in the solid state. In order to promote the dissolving in the solid state, the holding time may be more than or equal to 35 minutes or more than or equal to 40 minutes.

When the holding time is less than or equal to 60 minutes, the amount of Si segregated at crystal grain boundaries is likely to be small. In order to reduce the segregated Si, the holding time may be less than or equal to 55 minutes or less than or equal to 50 minutes.

### <<Aging Treatment>>

In the aging treatment, the holding temperature is a temperature selected from a range of more than or equal to 160°C and less than or equal to 180°C. The holding time is a time selected from a range of more than or equal to 5 hours and less than or equal to 35 hours.

When the holding temperature is more than or equal to 160°C, Mg₂Si or the like is precipitated. As a result, the effect of improving the strength by precipitation hardening is obtained. In order to promote the precipitation, the holding temperature may be more than or equal to 165°C.

When the holding temperature is less than or equal to 180°C, the precipitates are less likely to become coarse. As a result, breakage is suppressed from being caused by coarse precipitates. In this respect, the strength is likely to be high. In order to suppress formation of coarse precipitates, the holding temperature may be less than or equal to 175°C.

When the holding time is more than or equal to 5 hours, Mg₂Si or the like is precipitated. As a result, the effect of improving the strength is obtained as described above. In order to promote precipitation, the holding time may be more than or equal to 8 hours or more than or equal to 10 hours.

When the holding time is less than or equal to 35 hours, the precipitates are less likely to become coarse. As a result, breakage is suppressed as described above. In order to suppress formation of coarse precipitates, the holding time may be less than or equal to 30 hours.

In the case where the temperature is low in the above-described holding temperature range, when the holding time is long, Mg₂Si or the like is likely to be precipitated. In the case where the temperature is high in the above-described holding temperature range, the holding time may be short.

### «Softening Treatment»

In addition, conditions of the softening treatment are, for example, as follows: the holding temperature is a temperature selected from a range of more than or equal to 250°C and less than or equal to 450°C and the holding time is a time selected from a range of more than or equal to 0.5 hour and less than or equal to 40 hours.

### <Method of Manufacturing Aluminum Alloy Wire>

The aluminum alloy wire of the embodiment is manufactured by the following manufacturing method, for example. The manufacturing method includes: the above-described first step; the above-described second step; and the third step of performing, as the heat treatment, the softening treatment onto the plastic-worked member manufactured in the second step.

When the continuous casting method is used in the casting in the first step, the casted member can be mass-produced as described above. Further, plastic working will be readily performed and a long wire-drawn member or the like will be obtained in the second step. The casted member can be subjected to surface cutting prior to the second step as required.

The plastic working in the second step includes wire drawing. The plastic working in the second step may include rolling or swaging in addition to the wire drawing.

The rolling or the swaging is representatively performed in a hot or warm manner. When the rolling is performed to be continuous to the casting, the rolled member can be mass-produced. In this case, for example, a Properzi type continuous casting/rolling apparatus is used.

The wire drawing is representatively performed in a cold manner. Peeling can be performed prior to the wire drawing as required.

The softening treatment in the third step is representatively performed to remove strain introduced by plastic working. The softening treatment is performed at, for example, the following timing: (1) a timing after the rolling or the swaging, i.e., a timing before the wire drawing; (2) a timing between a plurality of passes when the wire drawing is performed for the plurality of passes; and (3) a timing after the final pass. The softening treatment is performed at at least one of the above-described timings. For the conditions of the softening treatment, see the above-described section <Softening Treatment>.

### <Method of Manufacturing Aluminum Alloy Member>

The aluminum alloy member of the embodiment having the above-described high tensile strength is manufactured by, for example, a first manufacturing method, second manufacturing method, or third manufacturing method described below.

The first manufacturing method includes: the above-described first step; the above-described second step; and the third step of performing the heat treatment onto the plastic-worked member manufactured in the above-described second step. The heat treatment in the third step includes the solution treatment and the aging treatment.

The second manufacturing method includes the first step and the step of performing the heat treatment onto the casted member manufactured in the first step. This heat treatment includes the solution treatment and the aging treatment.

The third manufacturing method includes the step of performing plastic working after the aging treatment in the first manufacturing method or the second manufacturing method.

For the conditions of the solution treatment and the aging treatment, see the above-described sections <Solution Treatment> and <Age Treatment>.

When the second step includes a plurality of types of plastic workings or when one plastic working includes a plastic working for a plurality of passes, the solution treatment may be performed between one plastic working and another plastic working or between passes.

The aging treatment can be performing at any timing after the solution treatment. For example, the aging treatment may be performed immediately after the solution treatment. Alternatively, a working such as plastic working or cutting may be performed between the solution treatment and the aging treatment.

When the aluminum alloy member of the embodiment has a portion in the form of a wire, the aluminum alloy wire of the embodiment can be used as the plastic-worked member instead of performing the first step and the second step in the first manufacturing method.

### <Method of Manufacturing Bolt>

The bolt of the embodiment having the above-described high tensile strength is manufactured by, for example, the following manufacturing method. The manufacturing method includes: a step of cutting the aluminum alloy wire of the embodiment into a predetermined length; a step of performing plastic working onto the cut piece; a step of performing solution treatment onto the cut piece or the plastic-worked member; and a step of performing aging treatment after the solution treatment. Examples of the plastic working include forging such as header working or component rolling. The aging treatment is performed after the component rolling, for example.

### [Test Example 1]

Each of aluminum alloy wires having compositions shown in Tables 1 to 4 was examined in terms of tensile strength (MPa), 0.2% proof stress (MPa) and breaking elongation (%) after sequentially performing the solution treatment and the aging treatment under below-described conditions. Results of measurement are shown in Tables 1 to 4.

### <Explanations for Samples>

Each of the samples shown in Tables 1 to 4 includes Si, Mg, Fe, Cu, and Mn as added elements. Parts of the samples further include Cr in addition to the above-described five elements. Alternatively, parts of the samples further include Cr and Sr in addition to the above-described five elements. The contents of the elements are amounts (mass%) shown in Tables 1 to 4. In each of the compositions of the samples shown in Tables 1 to 4, the remainder is Al and an inevitable impurity. In Tables 1 to 4, hyphen "-" indicates that a corresponding element is not added.

### <<Table 1: Addition of Sn>>

Each of samples No. 1 to No. 8 shown in Table 1 includes Sn in addition to the above-described elements.

### <<Table 2: Addition of Ni>>

Each of samples No. 11 to No. 18 shown in Table 2 includes Ni in addition to the above-described elements.

### <<Table 3: Addition of Ni and Sn>>

Each of samples No. 21 to No. 32 shown in Table 3 includes both Ni and Sn in addition to the above-described elements.

### <<Table 4: High-Content Si and High-Content Mg>>

In each of samples No. 41 to No. 53 shown in Table 4, the content of Si is more than 1.2 mass% and the content of Mg is more than 0.8 mass%.

Each of samples No. 41 to No. 46 includes Sn in addition to the above-described elements.

Each of samples No. 47 to No. 53 includes Ni in addition to the above-described elements.

Hereinafter, samples No. 1 to No. 53 each including at least one of Ni and Sn may be collectively referred to as "specific group of samples".

### «Sample No. 101»

A sample No. 101 shown in Tables 1 to 4 is a sample that includes Si, Mg, Fe, Cu, Mn, and Cr as the added elements and that does not include both Ni and Sn. In other words, sample No. 101 corresponds to the above-described conventional aluminum alloy.

### <Production of Aluminum Alloy Wire>

The aluminum alloy wire was a wire-drawn member having a wire diameter of 4.6 mm, and was produced in the following manner.

Pure aluminum is melted to produce a melt.

The added elements are added to the melt such that the contents of the added elements become the amounts (mass%) shown in Tables 1 to 4, and the melt is thereafter held for a predetermined period of time.

A process of removing hydrogen gas and a process of removing foreign matter are appropriately performed onto the melt composed of the aluminum alloy adjusted in components.

The produced melt of the aluminum alloy is casted. A casting temperature is 730°C. A solidification rate during the casting is more than or equal to 1°C/sec. The casted member is a round bar having a diameter of 30 mmϕ.

A casted member having a diameter of 30 mmϕ is subjected to surface cutting to prepare a round bar having a diameter of 24 mmϕ.

The round bar having been through the surface cutting is subjected to warm swaging to produce a wire member having a wire diameter of 10.3 mmϕ. A heating temperature of the swaging is 300°C.

The wire member having been through the swaging is subjected to cold wire drawing to produce a wire-drawn member having a wire diameter of 4.6 mmϕ. Here, the wire member before the wire drawing, the intermediate wire-drawn member having a wire diameter of 8.2 mmϕ, and the intermediate wire-drawn member having a wire diameter of 6.3 mmϕ were subjected to the softening treatment. The softening treatment is performed three times under conditions that a holding temperature is 300°C and a holding time is 3 hours.

The compositions of the obtained wire-drawn members are the same as those shown in Tables 1 to 4. A known method can be used for analysis on the compositions of the wire-drawn members. For example, an energy dispersive X-ray analysis apparatus or the like can be used.

### <Conditions of Heat Treatment>

The conditions of the solution treatment are such that the holding temperature is 560°C and the holding time is 45 minutes. When the holding time is elapsed, water quenching is performed. A temperature increasing time until the holding temperature is reached is 45 minutes.

The conditions of the aging treatment are such that the holding temperature is 160°C and the holding time is 16 hours or 30 hours.

It should be noted that each of the samples is subjected to no homogenization treatment during a period of time after the casting until the solution treatment.

### <Evaluations on Mechanical Properties>

Tensile strength (MPa), 0.2% proof stress (MPa), and breaking elongation (%) are measured by performing a tensile test at a room temperature. The tensile test is performed in accordance with JIS Z 2241: 2011. The test piece is produced from a heat-treated member obtained by performing the solution treatment and the aging treatment onto the wire-drawn member having a wire diameter of 4.6 mm.

**[Table 1]**

| Sample No. | Composition (Mass%) | | | | | | | | | | Tensile Strength | 0.2% Proof Stress | Breaking Elongation |
|---|---|---|---|---|---|---|---|---|---|---|---|---|---|
| | Si | Mg | Fe | Cu | Mn | Cr | Ni | Sn | Sr | Remainder | MPa | MPa | % |
| 101 | 1.12 | 0.86 | 0.55 | 0.30 | 0.29 | 0.01 | - | - | - | Al | 447.2 | 406.0 | 15.7 |
| 1 | 1.15 | 0.83 | 0.51 | 0.31 | 0.29 | 0.01 | - | 0.005 | - | Al | 451.3 | 405.4 | 16.5 |
| 2 | 1.16 | 0.85 | 0.51 | 0.30 | 0.28 | 0.01 | - | 0.02 | - | Al | 458.7 | 411.5 | 15.9 |
| 3 | 1.16 | 0.81 | 0.50 | 0.30 | 0.27 | 0.01 | - | 0.05 | - | Al | 458.2 | 421.7 | 17.2 |
| 4 | 1.21 | 0.82 | 0.52 | 0.31 | 0.32 | 0.01 | - | 0.11 | - | Al | 451.3 | 412.1 | 17.2 |
| 5 | 1.23 | 0.81 | 0.52 | 0.30 | 0.27 | 0.01 | - | 0.31 | - | Al | 448.7 | 398.6 | 19.2 |
| 6 | 1.19 | 0.84 | 0.50 | 0.30 | 0.28 | 0.01 | - | 0.50 | - | Al | 447.5 | 401.2 | 17.1 |
| 7 | 1.20 | 0.92 | 0.50 | 0.30 | 0.27 | - | - | 0.03 | - | Al | 458.5 | 409.1 | 15.0 |
| 8 | 1.17 | 0.81 | 0.52 | 0.30 | 0.27 | 0.01 | - | 0.02 | 0.02 | Al | 458.9 | 410.2 | 15.5 |

**[Table 2]**

| Sample No. | Composition (Mass%) | | | | | | | | | | Tensile Strength | 0.2% Proof Stress | Breaking Elongation |
|---|---|---|---|---|---|---|---|---|---|---|---|---|---|
| | Si | Mg | Fe | Cu | Mn | Cr | Ni | Sn | Sr | Remainder | MPa | MPa | % |
| 101 | 1.12 | 0.86 | 0.55 | 0.30 | 0.29 | 0.01 | - | - | - | Al | 447.2 | 406.0 | 15.7 |
| 11 | 1.16 | 0.84 | 0.50 | 0.28 | 0.29 | 0.01 | 0.01 | - | - | Al | 447.6 | 407.4 | 14.6 |
| 12 | 1.17 | 0.86 | 0.51 | 0.30 | 0.28 | 0.01 | 0.02 | - | - | Al | 450.6 | 412.6 | 16.1 |
| 13 | 1.15 | 0.85 | 0.52 | 0.29 | 0.30 | 0.01 | 0.05 | - | - | Al | 457.9 | 415.0 | 18.6 |
| 14 | 1.10 | 0.82 | 0.52 | 0.27 | 0.29 | 0.01 | 0.18 | - | - | Al | 456.5 | 421.5 | 20.0 |
| 15 | 1.12 | 0.81 | 0.54 | 0.28 | 0.30 | 0.01 | 0.28 | - | - | Al | 453.6 | 407.9 | 18.8 |
| 16 | 1.14 | 0.83 | 0.53 | 0.29 | 0.30 | 0.01 | 0.52 | - | - | Al | 451.2 | 405.7 | 16.0 |
| 17 | 1.17 | 0.81 | 0.54 | 0.31 | 0.27 | - | 0.05 | - | - | Al | 456.9 | 410.2 | 15.6 |
| 18 | 1.18 | 0.80 | 0.50 | 0.29 | 0.27 | 0.01 | 0.06 | - | 0.02 | Al | 457.5 | 413.2 | 18.2 |

**[Table 3]**

| Sample No. | Composition (Mass%) | | | | | | | | | | Tensile Strength | 0.2% Proof Stress | Breaking Elongation |
|---|---|---|---|---|---|---|---|---|---|---|---|---|---|
| | Si | Mg | Fe | Cu | Mn | Cr | Ni | Sn | Sr | Remainder | MPa | MPa | % |
| 101 | 1.12 | 0.86 | 0.55 | 0.30 | 0.29 | 0.01 | - | - | - | Al | 447.2 | 406.0 | 15.7 |
| 21 | 1.19 | 0.81 | 0.52 | 0.30 | 0.27 | 0.01 | 0.26 | 0.11 | - | Al | 471.0 | 427.6 | 15.5 |
| 22 | 1.13 | 0.86 | 0.51 | 0.29 | 0.27 | 0.01 | 0.26 | 0.05 | - | Al | 454.5 | 407.6 | 9.8 |
| 23 | 1.15 | 0.84 | 0.54 | 0.28 | 0.31 | 0.01 | 0.20 | 0.06 | - | Al | 468.0 | 423.7 | 20.4 |
| 24 | 1.20 | 0.80 | 0.50 | 0.30 | 0.27 | 0.01 | 0.05 | 0.05 | - | Al | 458.0 | 408.2 | 16.3 |
| 25 | 1.20 | 0.80 | 0.50 | 0.30 | 0.27 | 0.01 | 0.05 | 0.10 | - | Al | 461.1 | 410.3 | 17.2 |
| 26 | 1.20 | 0.80 | 0.50 | 0.30 | 0.27 | 0.01 | 0.15 | 0.05 | - | Al | 475.0 | 411.0 | 16.3 |
| 27 | 1.20 | 0.80 | 0.50 | 0.30 | 0.27 | 0.01 | 0.15 | 0.10 | - | Al | 470.2 | 415.0 | 15.4 |
| 28 | 1.20 | 0.80 | 0.50 | 0.30 | 0.27 | 0.01 | 0.15 | 0.20 | - | Al | 455.0 | 395.6 | 16.1 |
| 29 | 1.18 | 0.83 | 0.50 | 0.29 | 0.27 | 0.01 | 0.01 | 0.01 | - | Al | 451.8 | 408.8 | 14.2 |
| 30 | 1.17 | 0.82 | 0.53 | 0.30 | 0.29 | 0.01 | 0.50 | 0.50 | - | Al | 453.8 | 410.5 | 16.3 |
| 31 | 1.19 | 0.81 | 0.52 | 0.30 | 0.27 | - | 0.15 | 0.05 | - | Al | 474.2 | 409.5 | 15.8 |
| 32 | 1.20 | 0.82 | 0.51 | 0.31 | 0.28 | 0.01 | 0.15 | 0.10 | 0.02 | Al | 471.0 | 414.1 | 15.0 |

**[Table 4]**

| Sample No. | Composition (Mass%) | | | | | | | | | | Tensile Strength | 0.2% Proof Stress | Breaking Elongation |
|---|---|---|---|---|---|---|---|---|---|---|---|---|---|
| | Si | Mg | Fe | Cu | Mn | Cr | Ni | Sn | Sr | Remainder | MPa | MPa | % |
| 101 | 1.12 | 0.86 | 0.55 | 0.30 | 0.29 | 0.01 | - | - | - | Al | 447.2 | 406.0 | 15.7 |
| 41 | 1.42 | 0.95 | 0.51 | 0.29 | 0.28 | 0.01 | - | 0.01 | - | Al | 455.6 | 410.5 | 17.3 |
| 42 | 1.39 | 1.03 | 0.53 | 0.28 | 0.30 | 0.01 | - | 0.06 | - | Al | 471.0 | 424.1 | 18.0 |
| 43 | 1.50 | 0.96 | 0.52 | 0.30 | 0.27 | 0.01 | - | 0.10 | - | Al | 471.0 | 420.6 | 18.3 |
| 44 | 1.47 | 0.99 | 0.53 | 0.28 | 0.27 | 0.01 | - | 0.50 | - | Al | 462.3 | 411.2 | 15.2 |
| 45 | 1.48 | 1.00 | 0.50 | 0.30 | 0.28 | - | - | 0.05 | - | Al | 470.2 | 417.9 | 16.9 |
| 46 | 1.49 | 0.98 | 0.51 | 0.29 | 0.29 | 0.01 | - | 0.10 | 0.02 | Al | 470.5 | 417.2 | 17.0 |
| 47 | 1.45 | 0.98 | 0.50 | 0.30 | 0.28 | 0.01 | 0.01 | - | - | Al | 460.2 | 407.4 | 15.5 |
| 48 | 1.49 | 1.01 | 0.55 | 0.32 | 0.29 | 0.01 | 0.05 | - | - | Al | 465.8 | 413.0 | 14.4 |
| 49 | 1.38 | 1.01 | 0.55 | 0.31 | 0.28 | 0.01 | 0.20 | - | - | Al | 468.9 | 413.4 | 15.0 |
| 50 | 1.41 | 1.03 | 0.53 | 0.28 | 0.29 | 0.01 | 0.27 | - | - | Al | 458.0 | 432.2 | 13.6 |
| 51 | 1.43 | 0.95 | 0.52 | 0.29 | 0.28 | 0.01 | 0.50 | - | - | Al | 453.7 | 410.7 | 14.8 |
| 52 | 1.44 | 0.98 | 0.51 | 0.29 | 0.27 | - | 0.20 | - | - | Al | 467.1 | 411.9 | 14.7 |
| 53 | 1.50 | 1.01 | 0.52 | 0.28 | 0.27 | 0.01 | 0.20 | - | 0.02 | Al | 465.9 | 412.1 | 14.8 |

As shown in Tables 1 to 4, it is understood that the specific group of samples each composed of the aluminum alloy including at least one of Ni and Sn have higher tensile strengths than that of sample No. 101 in which both Ni and Sn are not included. Quantitatively, many samples in the specific group of samples have tensile strengths of more than or equal to 450 MPa. In the specific group of samples, there are samples having tensile strengths of more than or equal to 460 MPa or more than or equal to 470 MPa. This indicates that both Ni and Sn contribute to improvement in strength.

Further, the specific group of samples have 0.2% proof stresses of more than or equal to 390 MPa. In the specific group of samples, many samples have 0.2% proof stresses of more than or equal to 400 MPa. In the specific group of samples, there are samples having higher proof stresses than that of sample No. 101. Particularly, in the specific group of samples, there are samples having 0.2% proof stresses of more than or equal to 410 MPa. In view of this, it is considered that both Ni and Sn contribute to improvement in proof stress.

Further, the specific group of samples have breaking elongations of more than or equal to 5%. In the specific group of samples, many samples have breaking elongations of more than or equal to 10%. In the specific group of samples, there are samples having higher elongations than that of sample No. 101. Particularly, in the specific group of samples, there are samples having breaking elongations of more than or equal to 16%. In view of this, it is considered that both Ni and Sn contribute to improvement in elongation.

Further, in the specific group of samples, there are samples in which the tensile strengths, 0.2% proof stresses, and breaking elongations are all higher than those of sample No. 101. In view of this, it is indicated that with the aluminum alloy including at least one of Ni and Sn in addition to Si, Mg, Fe, Cu and Mn, an aluminum alloy member can be formed to have a high strength, a high strength and a high toughness. It is also indicated that with the aluminum alloy including at least one of Ni and Sn in addition to Si, Mg, Fe, Cu, and Mn as well as Cr or in addition to Si, Mg, Fe, Cu, and Mn as well as Cr and Sr, an aluminum alloy member can be formed to have a high strength, a high proof stress, and a high toughness.

Further, the following matters can be known from this test.
(1) See Table 1. Here, it can be said that the tensile strength and the 0.2% proof stress tend to be higher when the content of Sn is in a range of more than or equal to 0.005 mass% and less than or equal to 0.30 mass%.
(2) See Table 2. Here, it can be said that the tensile strength and the 0.2% proof stress tend to be higher when the content of Ni is in a range of more than 0.01 mass% and less than or equal to 0.50 mass%.
(3) In Table 3, Table 1 and Table 2, samples having similar contents of Sn and similar contents of Ni are compared with each other. For example, sample No. 26 is compared with each of samples No. 3 and No. 14. As a result, it can be said that the tensile strength of the sample including both Ni and Sn tends to be higher than that of the sample including Sn or Ni. In the specific group of samples shown in Table 3, many samples have tensile strengths of more than or equal to 460 MPa. Here, it can be said that when both Sn and Ni are included, the content of Sn is preferably more than or equal to 0.05 mass% and less than or equal to 0.20 mass% and the content of Ni is preferably more than or equal to 0.05 mass% and less than 0.30 mass%.
(4) In Table 4, Table 1 and Table 2, samples having similar contents of Sn and similar contents of Ni are compared with each other. For example, sample No. 43 is compared with sample No. 4. Further, sample No. 48 is compared with sample No. 13, for example. As a result, the sample including comparatively large amounts of Si and Mg and including Ni or Sn tends to have a higher tensile strength than that of the sample including comparatively small amounts of Si and Mg. In the specific group of samples shown in Table 4, many samples have tensile strengths of more than or equal to 460 MPa. In view of this, it can be said that the inclusion of the large amounts of Si and Mg instead of the inclusion of both Ni and Sn contributes to improvement in strength.

In view of the above-described test results, it was indicated that the aluminum alloy having the above-described specific composition including at least one of Ni and Sn has a higher strength than that of the conventional aluminum alloy by performing the solution treatment and the aging treatment thereto. Also, it is indicated that in some cases, one or both of the elongation and the proof stress are higher than that or those of the conventional aluminum alloy. It can be said that such an aluminum alloy is suitable for a material of a structural member such as a bolt.

It should be noted that the present invention is defined by the terms of the claims, rather than these examples, and is intended to include any modifications within the scope and meaning equivalent to the terms of the claims. For example, in Test Example 1, the types and contents of the added elements, the conditions of the solution treatment, the conditions of the aging treatment, the wire diameter, and the like can be changed as appropriate.

For example, in Test Example 1, the wire member to be subjected to the cold wire drawing may be a continuous-casted rolled member.

### REFERENCE SIGNS LIST

1: aluminum alloy wire;
10: bolt; 11: head portion; 12: shank portion; 13: threaded portion; 120: core portion;
D1: wire diameter

## Claims

1. An aluminum alloy having a composition comprising:
more than or equal to 1.0 mass% and less than or equal to 1.8 mass% of Si;
more than or equal to 0.5 mass% and less than or equal to 1.2 mass% of Mg;
more than or equal to 0.3 mass% and less than or equal to 0.8 mass% of Fe;
more than or equal to 0.1 mass% and less than or equal to 0.4 mass% of Cu;
more than or equal to 0.2 mass% and less than or equal to 0.5 mass% of Mn;
more than or equal to 0 mass% and less than or equal to 0.3 mass% of Cr; and
at least one of more than or equal to 0.005 mass% and less than or equal to 0.6 mass% of Ni and more than or equal to 0.005 mass% and less than or equal to 0.6 mass% of Sn, wherein
a remainder consists of Al and an inevitable impurity.

2. The aluminum alloy according to claim 1, wherein
a content of the Si is more than 1.2 mass%, and
a content of the Mg is more than 0.8 mass%.

3. The aluminum alloy according to claim 1 or 2, wherein both the Ni and the Sn are included in the aluminum alloy.

4. The aluminum alloy according to any one of claims 1 to 3, wherein
the aluminum alloy has a tensile strength of more than or equal to 450 MPa after solution treatment and aging treatment are sequentially performed,
a holding temperature in the solution treatment is a temperature selected from a range of more than or equal to 545°C and less than or equal to 575°C, and a holding time in the solution treatment is a time selected from a range of more than or equal to 30 minutes and less than or equal to 60 minutes, and
a holding temperature in the aging treatment is a temperature selected from a range of more than or equal to 160°C and less than or equal to 180°C and a holding time in the aging treatment is a time selected from a range of more than or equal to 5 hours and less than or equal to 35 hours.

5. The aluminum alloy according to claim 4, wherein after the solution treatment and the aging treatment are sequentially performed, the aluminum alloy has a breaking elongation of more than or equal to 5%.

6. The aluminum alloy according to claim 4 or 5, wherein after the solution treatment and the aging treatment are sequentially performed, the aluminum alloy has a 0.2% proof stress of more than or equal to 390 MPa.

7. An aluminum alloy wire composed of the aluminum alloy according to any one of claims 1 to 6.

8. The aluminum alloy wire according to claim 7, wherein the aluminum alloy wire has a wire diameter of more than or equal to 3 mm and less than or equal to 15 mm.

9. An aluminum alloy member composed of the aluminum alloy according to any one of claims 1 to 6, wherein the aluminum alloy member has a tensile strength of more than or equal to 450 MPa.

10. The aluminum alloy member according to claim 9, wherein at least one of the following conditions is satisfied:
a condition in which the aluminum alloy member has a breaking elongation of more than or equal to 5%; and
a condition in which the aluminum alloy member has a 0.2% proof stress of more than or equal to 390 MPa.

11. A bolt composed of the aluminum alloy according to any one of claims 1 to 6, wherein
the bolt has a tensile strength of more than or equal to 450 MPa,
the bolt has a breaking elongation of more than or equal to 5%, and
the bolt has a 0.2% proof stress of more than or equal to 390 MPa.
